# EUROPEAN PATENT SPECIFICATION

(11) **EP 2 703 112 B1**
(45) Date of publication and mention of the grant of the patent: **10.01.2018**
(21) Application number: 11864197.6
(22) Date of filing: 28.04.2011
(51) Int. Cl.: B23K 26/06, B23K 26/262, B21C 37/08

(54) **METHOD FOR PRODUCING LASER WELDED STEEL PIPE**
VERFAHREN ZUR HERSTELLUNG EINES LASERGESCHWEISSTEN STAHLROHRS
PROCÉDÉ POUR LA PRODUCTION DE TUYAU EN ACIER SOUDÉ AU LASER

(43) Date of publication of application: 05.03.2014
(73) Proprietor: JFE Steel Corporation, Tokyo, 100-0011 (JP)
(72) Inventor: YANO, Koji, Tokyo 100-0011 (JP); OI, Kenji, Tokyo 100-0011 (JP)
(74) Representative: Grünecker Patent- und Rechtsanwälte PartG mbB
(86) International application number: PCT/JP2011/060805
(87) International publication number: WO 2012/147213

(56) References cited:
- JP-A- 1 099 789
- JP-A- 7 060 470
- JP-A- 7 060 470
- JP-A- 8 090 265
- JP-A- 8 155 665
- JP-A- 9 024 480
- JP-A- 2000 317 667
- JP-A- 2003 340 582
- JP-A- 2009 178 768
- JP-A- 2010 167 435
- JP-A- 2010 240 734
- JP-A- 2010 240 734

## Description

### [Technical Field]

The present invention relates to a method of manufacturing a steel pipe (or tube, hereinafter referred to as a laser welded steel pipe) by welding longitudinal edges of an open pipe together using a laser beam, and particularly to a method of manufacturing a laser welded steel pipe appropriate for drilling and transporting oil or natural gas, such as oil country tubular goods or a line pipe.

### [Background Art]

Steel pipes used as oil country tubular goods or line pipes are broadly divided into welded steel pipes (for example, electric resistance welded steel pipes, UOE steel pipes, and other pipes) and seamless steel pipes. Among these steel pipes, electric resistance welded steel pipes are advantageous from an economical point of view because they can be manufactured at a low cost by using belt-like steel strips formed by hot rolling (so called hot rolled steel coils) as a starting material.

However, a typical electric resistance welded steel pipe inevitably includes a joint (a so-called seam) caused by welding because the electric resistance welded steel pipe is manufactured by forming a steel strip into a cylindrical shape using forming rolls to form an open pipe (here, an open pipe refers to a pipe-shaped strip formed by multiple forming rolls and having unwelded edges and such a pipe is referred to as an open pipe, below) and performing electric resistance welding (also referred to as high-frequency resistance welding) on edges of the open pipe (i.e., both side edges of the cylindrically formed steel strip) while pressing the open pipe with squeeze rolls. Such a seam has a problem of poor low-temperature toughness. Thus, oil country tubular goods or a line pipe employing an electric resistance welded steel pipe is difficult to use in a cold district. The reason why such a seam has poor low-temperature toughness is because, while edges are being welded together, the high-temperature molten metal reacts with atmospheric oxygen and forms an oxide, which is likely to remain in the seam.

The electric resistance welded steel pipe has another problem in that the corrosion resistance of the seam is likely to be deteriorated because an alloy element in the molten metal is likely to segregate while the edges are being welded together. Thus, oil country tubular goods or line pipes employing electric resistance welded steel pipes are difficult to use in a severe corrosion environment (for example, sour environment).

Meanwhile, welding with laser beams (hereinafter referred to as laser welding) has been receiving attention as a welding method with which the low-temperature toughness and the corrosion resistance of the seam are not deteriorated. With the laser welding, a heat source can have a small size and high-density heat energy can be converged. The laser welding thus can prevent an oxide from being formed in the molten metal or an alloy element from segregating in the molten metal. Thus, when the laser welding is employed in the manufacturing of welded steel pipes, the low-temperature toughness and the corrosion resistance of the seam can be prevented from being deteriorated.

Thus, a technology for manufacturing steel pipes (or steel tubes, i.e., laser welded steel pipes) by emitting laser beams onto the edges of open pipes to weld the edges together has been put into practice during manufacturing of welded steel pipes.

The laser welding, however, is performed by irradiating a weld portion with a laser beam, which is a high-energy density light beam, converged by an optical component and causes a metal to melt rapidly. Thus, the molten metal scatters from the formed molten weld pool as spatter. The scattered spatter adheres to welding equipment, thereby degrading the quality of the seam. Concurrently, the spatter also adheres to the optical component, making the welding operation unstable. Since laser welding is performed by converging high-density heat energy, a large amount of spatter is formed, causing welding defects such as occurrence of undercut or underfill (or depression). If underfill occurs in a weld portion, the strength of the weld portion is reduced.

In view of these problems, various technologies for preventing adherence of spatter or occurrence of spattering during laser welding have been studied. For example, a technology for preventing the occurrence of spattering by reducing laser power or by changing a focus position by a large degree (that is, by defocusing) has been put into practice. Reduction of laser power or defocusing, however, not only leads to reduction of welding speed (i.e., reduction of weld efficiency) but also involves a problem of making lack of penetration more likely to occur.

Patent Literature 1 discloses a technology for preventing occurrence of spattering by dividing a laser beam into multiple laser beam spots. However, the laser welding technology using multiple laser beam spots into which a laser beam is divided is similar to the laser welding technology with a lower laser power. Thus, such a technology involves not only reduction of weld efficiency but also a problem of making lack of penetration more likely to occur. Furthermore, since prisms that divide laser beams are expensive, the cost of the welding operation inevitably increases.

Patent Literature 2 discloses a technology for preventing underfill of deposit metal from occurring by using a filler wire during laser welding. With this technology, however, the components of the filler wire change the composition of the weld metal. Thus, an appropriate filler wire has to be selected in accordance with the components of open pipes, thereby increasing the burden of stock management of filler wires or production control of laser welding.

Patent Literature 3 discloses a technology for preventing welding defects by using laser welding and arc welding together. This technology, however, makes the structure of welding equipment complex, thereby increasing the burden of not only maintenance but also management of the welding operation.

Patent Literature 4 discloses a method with the features in the preamble of claim 1.

### [Citation List]

### [Patent Literature]

[PTL 1] Japanese Unexamined Patent Application Publication No. 7-214361
[PTL 2] Japanese Unexamined Patent Application Publication No. 2004-330299
[PTL 3] Japanese Unexamined Patent Application Publication No. 2004-223543
Patent Literature 4
   JP-A-2010240734

### [Summary of Invention]

### [Technical Problem]

An object of the present invention is to provide a method of efficiently manufacturing a high-quality laser welded steel pipe at a high yield ratio while occurrence of undercut or underfill is prevented by appropriately arranging multiple portions (that is, spots) to be heated and melted by irradiation of multiple laser beams and appropriately keeping each spot diameter or each spot length on the upper surface (steel strip surface) of an open pipe so that the energy density on the outer surface of the open pipe is controlled during the manufacture of a laser welded steel pipe.

### [Solution to Problem]

The inventors investigated and studied a stabilization technology for stabilizing a welding phenomenon during laser welding when a laser welded steel pipe is to be manufactured by performing laser welding on edges of an open pipe.

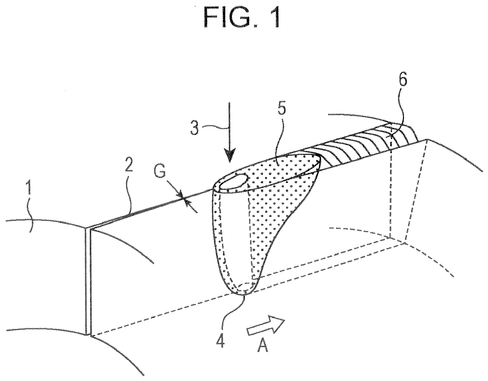

Fig. 1 is a perspective view that schematically illustrates a conventional way of welding a junction between edges 2 of an open pipe 1 by using a single laser beam during the manufacture of a laser welded steel pipe. The arrow A in Fig. 1 indicates the traveling direction of an open pipe. Here, a deep cavity (hereinafter referred to as a keyhole) 4 formed as a result of irradiation with a laser beam 3 and a molten metal 5 formed around the keyhole 4 are illustrated in perspective. As illustrated in Fig. 1, when edges 2 are irradiated with a laser beam 3, the edges 2 melt due to convergent high-density heat energy and a keyhole 4 is formed in a molten metal 5 due to evaporating pressure and evaporating reaction force that occur when the molten metal 5 evaporates. The inside of the keyhole 4 is considered to be filled with high-temperature plasma that has occurred as a result of the laser beam 3 entering the keyhole 4 and metal vapour being electrolytically dissociated by the energy of the laser beam 3.

The keyhole 4 indicates a position at which the heat energy of a laser beam 3 converges the most. By positioning a junction between the edges within the keyhole 4, a laser welded steel pipe can be stably manufactured. However, a highly precise positioning technology is required to make the junction between the edges 2 coincide with the keyhole 4. If the processing state of the edges 2 or the butting state of the edges 2 is unstable, the molten metal 5 is made unstable. Consequently, spattering occurs frequently and welding defects such as undercut or underfill are more likely to occur. In view of these problems, the energy density of a laser beam with which the junction between the edges 2 is irradiated is adjusted. For energy density adjustment, the spot diameter, the spot shape, and the number of spots of the laser beam are appropriately maintained or the focus position of the laser beam is changed. In addition, the laser beam is emitted to a position out of the junction.

Adjusting forms of spots in this manner is a technique that can be executed by manufacturing an appropriate collection lens or collection mirror.

The present invention is made in view of these findings.

Specifically, the present invention provides a method of manufacturing a laser welded steel pipe by forming a steel strip into a cylindrical open pipe with forming rolls and performing welding on edges of the open pipe by emitting a laser beam onto the edges from an outer surface side of the open pipe while pressing the edges with squeeze rolls, the method comprising: performing welding using a plurality of laser beams each having a spot diameter exceeding 0.3 mm on an upper surface of the open pipe (a surface of a steel strip), the plurality of laser beams being arranged such that the sum of spot diameters (hereinafter referred to as spot lengths) of the plurality of laser beams, the spot lengths extending perpendicularly to a welding line, on the surface of the steel strip is 0.5 mm or larger and such that a distance between spot centers of the plurality of laser beams in a direction of the welding line falls within 5 mm.

In the method of manufacturing a laser welded steel pipe according to the present invention, it is preferable that an energy density of each of the laser beams on an outer surface of the open pipe be 70 kW/mm² or smaller. It is also preferable that a focus position of each of the laser beams be positioned 3T to -3T away from an outer surface of the open pipe where a thickness of the open pipe is denoted by t. It is also preferable that the sum of laser power of the plurality of laser beams be 15 kW or more and a welding speed be 7 m/min or more. It is preferable that each of the laser beams is emitted at a lead angle of 5 to 50° (an angle from a direction perpendicular to the pipe surface to a direction opposite to the welding direction which is referred to as a lead direction). It is preferable that the open pipe have a thickness t exceeding 3 mm. It is preferable that an upset of 0.3 to 1.0 mm is applied to the edges of the open pipe when the edges are pressed with the squeeze rolls.

It is also preferable that, when a trailing beam of the laser beams is arranged in the direction of the welding line, a lead angle of the trailing beam be smaller than a lead angle of a leading beam of the laser beams.

### [Advantageous Effects of Invention]

According to the present invention, a laser welded steel pipe can be stably manufactured at a high yield ratio while occurrence of undercut or underfill is prevented by appropriately arranging multiple portions (that is, spots) to be heated and melted by irradiation of multiple laser beams and appropriately keeping each spot diameter or each spot length on the upper surface (steel strip surface) of an open pipe so that the energy density on the outer surface of the open pipe is controlled during the manufacture of a laser welded steel pipe. The obtained laser welded steel pipe has a seam that is excellent in terms of low-temperature toughness and corrosion resistance and is thus appropriate for oil country tubular goods or a line pipe used in a cold district or corrosion environment.

### [Brief Description of Drawings]

[Fig. 1] Fig. 1 is a perspective view schematically illustrating a conventional case where a junction between edges of an open pipe is welded.
[Fig. 2] Fig. 2 is a plan view schematically illustrating positions to which multiple laser beams are emitted according to the present invention.
[Fig. 3] Fig. 3 is a perspective view schematically illustrating a case to which the present invention is applied where a junction between edges of an open pipe is welded.
[Fig. 4] Fig. 4 illustrates the sum of spot lengths of laser beams perpendicular to a welding line on a steel strip surface and a distance between spot centers in the welding line direction on each steel strip surface.
[Fig. 5] Fig. 5 schematically illustrates a relationship between the laser beam according to the present invention and the lead angle thereof.
[Fig. 6] Fig. 6 schematically illustrates relationships between the lead angle of a leading beam and the lead angle of a trailing beam according to the present invention.

### [Description of Embodiments]

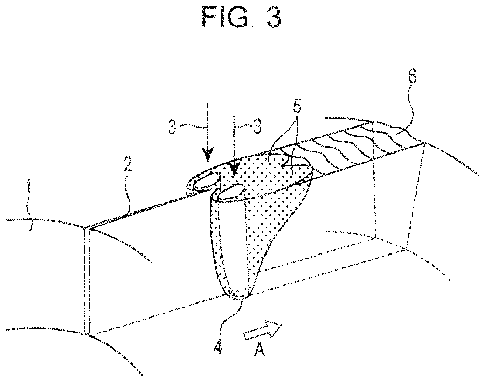

In the present invention, a laser welded steel pipe is manufactured by using multiple laser beams. Fig. 3 illustrates an example in which two laser beams are used. In Fig. 3, edges 2 of an open pipe 1 are irradiated with two laser beams 3 from the outer surface side while being pressed with squeeze rolls (not illustrated). The arrow A in Fig. 3 indicates the traveling direction of the open pipe 1. Here, keyholes 4 formed as a result of irradiation with the laser beams 3 and a molten metal 5 formed around the keyholes 4 are illustrated in perspective.

### (1) Positions on Open Pipe Upper Surface (Steel Strip Surface) to Which Laser Beams are Emitted and Position of Edges

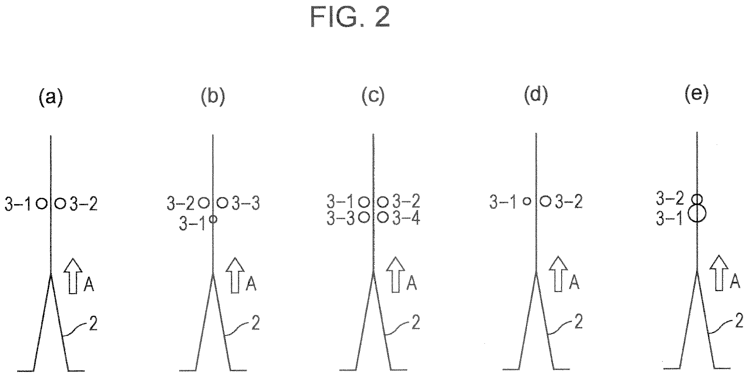

Fig. 2 illustrates, in plan, examples of positions to which two or more laser beams 3 are emitted. The arrow A in Fig. 2 indicates the traveling direction of the open pipe 1.

Fig. 2(a) illustrates positions to which two laser beams are emitted, specifically, laser beams 3-1 and 3-2 having the same spot diameter are arranged on both sides of the edges 2. Fig. 3 illustrates this example in perspective

Fig. 2(b) illustrates positions to which three laser beams are emitted, specifically, a laser beam 3-1 having a small spot diameter is used for preheating and laser beams 3-2 and 3-3 having the same spot diameter are arranged on both sides of the edges 2.

Fig. 2(c) illustrates positions to which four laser beams are emitted, specifically, laser beams 3-1, 3-2, 3-3, and 3-4 having the same spot diameter are arranged on both sides of the edges 2, two beams on each side.

Fig. 2(d) illustrates positions to which two laser beams are emitted, specifically, laser beams 3-1 and 3-2 having different spot diameters are arranged on both sides of the edges 2. In this example, since the laser beam 3-1 has a small spot diameter, the laser beam 3-1 is positioned closer to the edges 2 than the laser beam 3-2 is.

Fig. 2(e) illustrates positions to which two laser beams are emitted, where laser beams 3-1 and 3-2 are arranged along the edges 2. In this example, the laser beam 3-2 has a small spot diameter

Arrangement of laser beams in the case of using multiple laser beams is not limited to the examples illustrated in Fig. 2 and laser beams may be appropriately arranged in accordance with their purpose of use. However, if five or more laser beams are used, the structure of a welding apparatus becomes complex, thereby increasing the burden of maintenance. It is thus desirable to use 2 to 4 laser beams.

### (2) Spot Diameter on Open Pipe Upper Surface (Steel Strip Surface)

It is preferable to use multiple laser beams each having a spot diameter exceeding 0.3 mm on the upper surface of an open pipe (steel strip surface). This is because, if the spot diameter is 0.3 mm or smaller, it is difficult to stably maintain a keyhole. The upper limit of the spot diameter on the open pipe upper surface (steel strip surface) is 1.0 mm.

### (3) Spot Length and Distance between Spot Centers on Open Pipe Upper Surface (Steel Strip Surface)

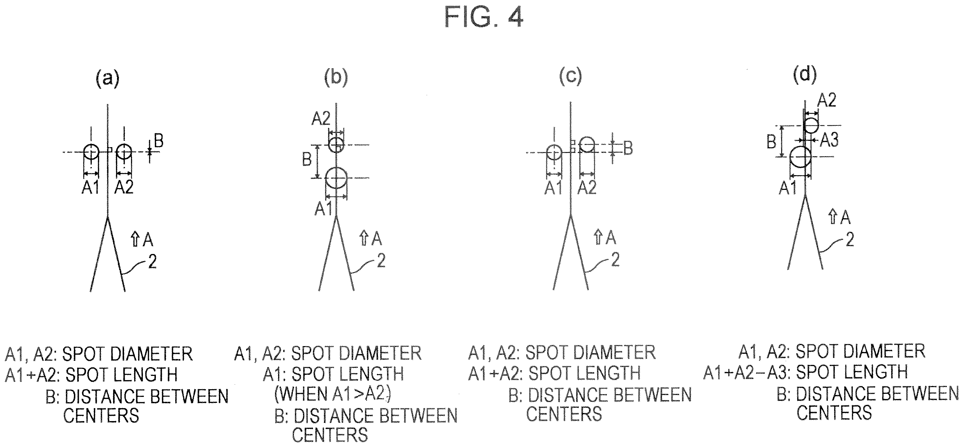

As illustrated in Fig. 4, multiple laser beams are used, the sum of spot lengths of the laser beams, the spot lengths extending perpendicularly to a welding line on the steel strip surface, is set to be 0.5 mm or more, and the distance between the spot centers in the welding line direction is set to be within 5 mm. By setting the sum of the spot lengths to be 0.5 mm or more, positioning the junction within a molten metal 5 is made relatively easy. In addition, by setting the distance between the spot centers to be within 5 mm, the molten metal 5 can be prevented from being divided into parts. Fig. 4 specifically illustrates the definitions of spot lengths extending perpendicularly to the welding line and the distance between the spot centers.

### (4) Energy Density of Laser Beam

It is preferable that the energy density of each laser beam 3 on the outer surface of the open pipe 1 be 70 kW/mm² or lower. The lower limit of the energy density is set to be 1 kW/mm² or more to prevent the penetration property from being reduced because the penetration property would be reduced if a laser beam 3 is simply defocused. However, if the energy density exceeds 70 kW/mm², the amount of spatter generated from the outer surface of the open pipe 1 increases. Here, the energy density of each laser beam 3 is adjusted by controlling the laser power and the spot diameter.

### (5) Distance from Upper Surface of Open Pipe (Steel Strip Surface) to Focus Position

The distance from the upper surface of the open pipe to the focus position is denoted by t (mm) and the thickness of the steel strip of the open pipe is denoted by T (mm). If the distance t from the upper surface of the open pipe to the focus exceeds 3 × T (specifically, 3T upward from the upper surface), the position of the focus is too high, making it difficult to stably maintain the keyhole. On the other hand, if the distance t exceeds -3 × T (specifically, 3T downward from the upper surface), the position of the focus is too low, making spatter more likely to be generated from the back surface of the steel strip (i.e., the inner side of the open pipe). Thus, the distance t from the upper surface of the open pipe to the focus is preferably set within the range from -3 × T to 3 × T. Here, it is preferable that the distance from the upper surface of the steel strip to the focus for the leading laser beam 3a and the distance from the upper surface of the steel strip to the focus for the trailing laser beam 3b coincide with each other in terms of the stability of a keyhole.

### (6) Thickness of Open Pipe

Preferably, the thickness T of the open pipe 1 exceeds 3 mm. If the thickness T is 3 mm or smaller, burn-through is likely to occur.

### (7) Laser Power and Welding Speed

Generally, the amount of spatter that is formed during laser welding decreases as the laser power is reduced and as the welding speed is reduced. However, adjusting the laser power and the welding speed for the purpose of preventing spattering from occurring leads to reduction in productivity of laser welded steel pipes. This adjustment also makes it more likely that blowholes will occur. Thus, from the view points of improvement in productivity and reduction of blowholes, it is preferable that the sum of the laser power of multiple laser beams 3 be set to be 15 kW or more and the welding speed be set at 7 m/min or higher. If the sum of the laser power is less than 15 kW, the welding speed is reduced to less than 7 m/min, thereby leading to reduction in productivity and occurrence of blowholes.

### (8) Distance between Focuses of Laser Beams

Preferably, the distance between the focuses of the laser beams 3 is 200 mm or larger. If the distance between the focuses is smaller than 200 mm, laser welding is performed unstably because the focus positions fluctuate in the Z axis direction of the edges 2 of the open pipe 1 (i.e., the direction of the optical axes of the laser beams).

### (9) Lead Angle of Laser Beam

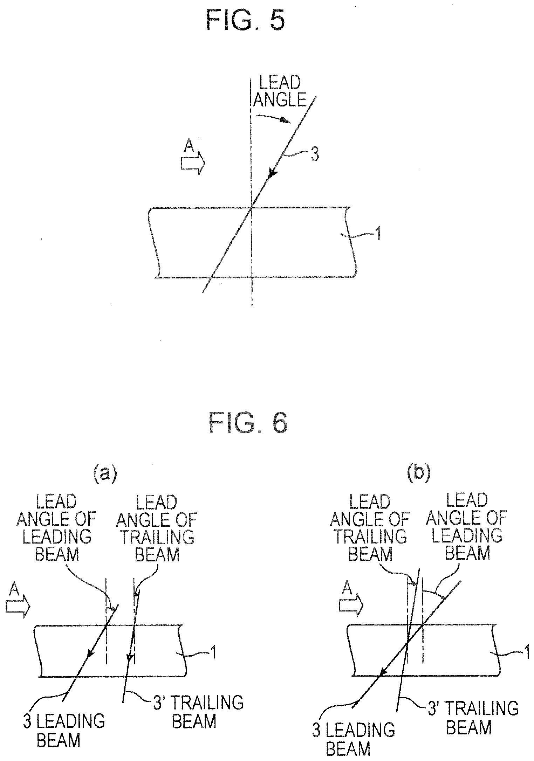

As illustrated in Fig. 5, it is required that an angle at which each laser beam 3 is emitted (hereinafter referred to as a lead angle) fall within the range between 5 to 50°. By emitting the laser beam 3 at the lead angle, the amount of spatter generated is reduced. Such an effect, however, cannot be obtained if the lead angle is either below 5° or over 50°. It is more preferable that the lead angle fall within the range between 15° to 45°. As illustrated in Fig. 6, in the case where a trailing beam is arranged in the welding line direction, it is preferable that the lead angle of the trailing beam be smaller than the lead angle of the leading beam. Here, the leading beam represents a beam that is ahead of the trailing beam in the welding line direction on the lower surface of the steel strip. The arrow A illustrated in Fig. 5 and Fig. 6 indicates the traveling direction of the open pipe 1.

### (10) Upset Length

It is preferable to apply an upset of 0.3 to 1.0 mm to edge portions 2 in order to prevent occurrence of undercut or underfill because it is difficult to completely prevent occurrence of spattering due to laser welding. If the upset length is below 0.3 mm, undercut or underfill cannot be prevented from occurring. On the other hand, if the upset length exceeds 1.0 mm, it takes a long time to maintain the seam 6.

### (11) Junction between Edges

The junction between the edges 2 in the traveling direction A of the open pipe 1 may be formed at any position at which an average distance between the edges 2 is reduced to 0.5 mm or smaller by using squeeze rolls (not illustrated).

### (12) Oscillator of Laser Beam

Any of various forms of oscillators can be used as a laser beam oscillator used in the present invention. Preferable examples of the oscillator include a gas laser using a gas (for example, carbon dioxide gas, helium-neon, argon, nitrogen, and iodine) as a medium; a solid laser using a solid (for example, YAG into which a rare earth element is doped) as a medium; a fiber laser using a fiber as a laser medium instead of bulk; and a disk laser. Alternatively, a semiconductor laser may be used.

### (13) Auxiliary Heat Source

An auxiliary heat source may be used to heat the open pipe 1 from an outer side of the open pipe 1. The configuration of the auxiliary heat source is not particularly limited as long as the heat source can heat and melt the outer surface of the open pipe 1. For example, means operated with a burner melting method, a plasma melting method, a tungsten inert gas melting method, an electron beam melting method, a laser beam melting method, and other methods are appropriate for the auxiliary heat source.

Nevertheless, it is most preferable to use an arc as the auxiliary heat source. A device that can apply an electromagnetic force (that is, an electromagnetic force occurring from a magnetic field of welding currents) to a molten metal 5 in such a direction as to prevent burn-through of the molten metal 5 is used as an arc producer. For example, technologies known to date such as a tungsten inert gas welding or plasma arc welding can be used. Preferably, an arc producer is disposed so as to be integrated with a laser beam. The reason for this disposition is to effectively exert an influence of the magnetic field, occurring around the welding currents that produce an arc, on a molten metal 5. It is more preferable that the arc producer be positioned so as to be ahead of the laser beams 3. This is because this positioning allows moisture or oil content to be removed from the edges 2.

Even in the case where an auxiliary heat source other than an arc is used, it is preferable that the auxiliary heat source be disposed so as to be integrated with an oscillator of the laser beams 3. This is because, if the auxiliary heat source and a laser are not integrally disposed, a large amount of heat is required to obtain an effect of the auxiliary heat source, thereby making reduction of welding defects (such as undercut) very difficult. It is more preferable that the auxiliary heat source be positioned so as to be ahead of the oscillator of the laser beams 3. This is because this positioning allows moisture or oil content to be removed from the edges 2.

In the present invention, laser welding can be performed even on a thick open pipe 1 (for example, having a thickness of 4 mm or larger) without preheating the edges 2 by high-frequency induction heating or by other means. Nevertheless, preheating the edges 2 brings about effects such as improvement in productivity of laser welded steel pipes.

As described above, according to the present invention, a laser welded steel pipe is manufactured by laser welding with a high energy. Thus, occurrence of undercut or underfill is reduced and a high-quality laser welded steel pipe can be manufactured at a high yield ratio without reducing weld efficiency. The obtained laser welded steel pipe has a seam 6 that is excellent in terms of low-temperature toughness or corrosion resistance and is appropriate for oil country tubular goods or a line pipe used in a cold district or a corrosion environment.

### [Example]

Laser welded steel pipes were manufactured by forming belt-like steel strips into cylindrical open pipes using forming rolls, pressing the edges of the open pipes with squeeze rolls, and emitting laser beams from the outer surface side of the open pipes. Components of the steel strips are shown in Table 1.

Laser welding was performed using two fiber laser oscillators of 10 kW. The power of the oscillators and the welding speed were set as shown in Table 2.

Examples of the invention illustrated in Table 2 are examples that satisfy conditions essential for the present invention. Among the examples of the invention, steel pipe No. 10 is an example in which the welding speed falls outside the preferable range of the invention, steel pipe No 11 is an example in which the laser power falls outside the preferable range of the invention, steel pipe No. 12 is an example in which the upset length falls outside the preferable range of the invention, and steel pipe No. 13 is an example in which the energy density falls outside the preferable range of the present invention. All of these examples are regarded as examples of the invention since they satisfy conditions essential for the present invention.

Among comparative examples, steel pipe Nos. 7, 14, and 15 are examples in which the spot diameter falls outside the preferable range of the present invention, steel pipe No. 8 is an example in which the spot length falls outside the preferable range of the present invention, and steel pipe No 9 is an example in which the distance between spot centers falls outside the preferable range of the present invention.

Obtained laser welded steel pipes were subjected to the ultrasonic inspection test, and the seam of each pipe was inspected for a length of 20 m in accordance with JIS G0582. The results of inspection are shown in Table 2. In Table 2, regarding an artificial defect of an N5 inner/outer surface notch serving as a reference, when an indication of the peak level is 10% or lower, the steel pipe is evaluated as being excellent (double circle mark). When the indication of the peak level is higher than 10% but not higher than 25%, the steel pipe is evaluated as being good (circle mark). When the indication of the peak level is higher than 25% but not higher than 50%, the steel pipe is evaluated as being fair (triangle mark). When the indication of the peak level exceeds 50%, the steel pipe is evaluated as being poor (cross mark).

As is clear from Table 2, the examples of the invention were evaluated as being either excellent (double circle mark), good (circle mark), or fair (triangle mark) in the ultrasonic inspection. Welding defects such as undercut or underfill due to occurrence of spattering were not observed. On the other hand, the comparative examples were evaluated as being poor (cross mark) in the ultrasonic inspection. Moreover, welding defects such as undercut or underfill were observed. In steel pipe No. 13, which is one of the examples of the present invention, welding defects such as undercut or underfill were slightly observed.

### [Industrial Applicability]

The present invention is remarkably effective from the industrial point of view because the present invention allows laser welded steel pipes to be stably manufactured at a high yield ratio and the obtained laser welded steel pipes have a seam that is excellent in terms of low-temperature toughness and corrosion resistance and are thus appropriate for oil country tubular goods or a line pipe used in a cold district or corrosion environment.

### [Reference Signs List]

- 1: open pipe
- 2: edge
- 3: laser beam
- 4: keyhole
- 5: molten metal
- 6: seam

### [Table 1]

**Table 1**

| Steel type | Component (mass %) | | | | | | | | | | | | | Remarks |
|---|---|---|---|---|---|---|---|---|---|---|---|---|---|---|
| | C | Si | Mn | P | S | Cr | Ni | Mo | Cu | A1 | Ti | N | Residue | |
| A | 0.06 | 0.29 | 1.65 | 0.011 | 0.003 | - | - | - | 0.05 | 0.035 | 0.029 | 0.004 | Fe and inevitable impurities | Plain carbon steel |
| B | 0.01 | 0.11 | 0.27 | 0.012 | 0.001 | 12.2 | 4.2 | 2 | 0.16 | 0.028 | 0.078 | 0.008 | Fe and inevitable impurities | Stainless steel |

### [Table 2]

**Table 2**

| Steel pipe No. | Steel type | Dimensions of welded steel pipe | | Welding Conditions | | | | | | | | | | | Remarks |
|---|---|---|---|---|---|---|---|---|---|---|---|---|---|---|---|
| | | Outer diameter | Thickness | Welding speed | Laser power | Number of beams | Spot diameter | Sum of spot lengths perpendicular to welding line | Distance between spot centers in welding line direction | Lead angle | Focus position | Energy density | Upset length | Ultrasonic inspection | |
| | | (mm) | (mm) | (m/min) | (kW) | (beams) | (mm) | (mm) | (mm) | (°) | (mm) | (kW/mm²) | (mm) | | |
| 1 | A | 273 | 6.4 | 7 | 10 kW x 2 | 2 | 0.32 | 0.64 | 0 | 10 | 3 | 24 | 0.5 | ○ | Example of invention |
| 2 | B | 273 | 6.4 | 7 | 10 kW x 2 | 2 | 0.32 | 0.64 | 0 | 10 | 3 | 24 | 0.5 | ○ | Example of invention |
| 3 | A | 273 | 3.2 | 10 | 10 kW x 2 | 2 | 0.50 | 0.50 | 1 | Leading 15 Trailing 30 | 2 | 37 | 0.3 | ⊚ | Example of invention |
| 4 | B | 273 | 3.2 | 10 | 10 kW x 2 | 2 | 0.50 | 0.50 | 2 | Leading 15 Trailing 40 | 2 | 37 | 0.3 | ⊚ | Example of invention |
| 5 | A | 273 | 6.4 | 7 | 10 kW x 2 | 2 | 0.26 | 0.52 | 1 | 5 | 3 | 28 | 1 | ○ | Example of invention |
| 6 | B | 273 | 3.2 | 10 | 8 kW x 2 | 2 | 0.26 | 0.52 | 1 | 5 | 2 | 35 | 1 | ⊚ | Example of invention |
| 7 | A | 273 | 6.4 | 7 | 10 kW x 2 | 2 | 0.23 | 0.46 | 0 | 10 | 3 | 16 | 0.5 | × | Comparative example |
| 8 | A | 273 | 6.4 | 7 | 10 kW x 2 | 2 | 0.40 | 0.48 | 0 | 10 | 3 | 24 | 0.5 | × | Comparative example |
| 9 | B | 273 | 6.4 | 7 | 10 kW x 2 | 2 | 0.50 | 0.50 | 5.5 | Leading 10 Trailing 30 | 3 | 24 | 0.5 | × | Comparative example |
| 10 | A | 273 | 3.2 | 5 | 10 kW x 2 | 2 | 0.32 | 0.74 | 0 | 15 | 2 | 37 | 0.3 | Δ | Example of invention, |
| 11 | A | 273 | 3.2 | 10 | 7 kW x 2 | 2 | 0.32 | 0.74 | 0 | 15 | 2 | 37 | 0.3 | Δ | Example of invention |
| 12 | B | 273 | 3.2 | 10 | 10 kW x 2 | 2 | 0.32 | 0.74 | 0 | 15 | 2 | 37 | 0 | Δ | Example of invention |
| 13 | B | 273 | 3.2 | 10 | 10 kW x 2 | 2 | 0.32 | 0.74 | 0 | 1.5 | 0 | 124 | 0.3 | Δ | Example of invention |
| 14 | A | 273 | 6.4 | 7 | 10 kW x 2 | 1* | 0.60 | 1.20 | 0 | 5 | 3 | 71 | 1 | × | Comparative example |
| 15 | B | 273 | 3.2 | 10 | 10 kW x 2 | 1* | 0.26 | 0.52 | 0 | 5 | 3 | 72 | 1 | × | Comparative example |

| | | | | | | | | | | | | | | | |
|---|---|---|---|---|---|---|---|---|---|---|---|---|---|---|---|
| "*" denotes the beam divided into two using an optical system. "Leading" denotes a leading beam and "Trailing" denotes a trailing beam. | | | | | | | | | | | | | | | |

## Claims

1. A method of manufacturing a laser welded steel pipe by forming a steel strip into a cylindrical open pipe (1) with forming rolls and performing welding on edges (2) of the open pipe (1) by emitting a laser beam (3) onto the edges (2) from an outer surface side of the open pipe (1) while pressing the edges (2) with squeeze rolls, the method **characterised in that** it comprises:
performing welding using a plurality of laser beams (3) each having a spot diameter of 0.3 mm or larger on a surface of a steel strip, the plurality of laser beams (3) being arranged such that the sum of spot lengths of the plurality of laser beams (3), the spot lengths extending perpendicularly to a welding line, on the surface of the steel strip is 0.5 mm or larger and such that a distance between spot centers of the plurality of laser beams (3) in a direction of the welding line falls within 5 mm, wherein
each of the laser beams (3) is emitted at a lead angle of 5 to 50°, the angle being calculated from a direction perpendicular to the pipe surface to a direction opposite to the welding direction and
wherein a trailing beam of the laser beams (3) is arranged in the direction of the welding line and a lead angle of the trailing beam is smaller than a lead angle of a leading beam of the laser beams (3).

2. The method of manufacturing a laser welded steel pipe according to Claim 1, wherein an energy density of each of the laser beams (3) on an outer surface of the open pipe (1) is 70 kW/mm² or smaller.

3. The method of manufacturing a laser welded steel pipe according to Claim 1 or 2, wherein a focus position of each of the laser beams (3) is positioned 3T to -3T away from an outer surface of the open pipe (1) where a thickness of the open pipe (1) is denoted by T.

4. The method of manufacturing a laser welded steel pipe according to any one of Claims 1 to 3, wherein the sum of laser power of the plurality of laser beams (3) is 15 kW or more and a welding speed is 7 m/min or more.

5. The method of manufacturing a laser welded steel pipe according to any one of Claims 1 to 4, wherein the open pipe (1) has a thickness T exceeding 3 mm.

6. The method of manufacturing a laser welded steel pipe according to any one of Claims 1 to 5, wherein an upset of 0.3 to 1.0 mm is applied to the edges (2) of the open pipe (1) when the edges (2) are pressed with the squeeze rolls.

## Patentansprüche

1. Verfahren zur Herstellung eines lasergeschweißten Stahlrohrs durch Formen eines Bandstahls zu einem zylindrischen offenen Rohr (1) mit Formwalzen und Durchführen von Schweißen an den Kanten (2) des offenen Rohres (1) durch Emittieren eines Laserstrahls (3) auf die Kanten (2) von einer Außenflächenseite des offenen Rohrs (1) bei gleichzeitigem Anpressen der Kanten (2) mit Abquetschwalzen, wobei das Verfahren **dadurch gekennzeichnet ist, dass** es umfasst:
Durchführen von Schweißen unter Verwendung einer Vielzahl von Laserstrahlen (3) die jeweils einen Fleckdurchmesser von 0,3 mm oder mehr aufweisen, auf einer Oberfläche eines Bandstahls, wobei die Vielzahl von Laserstrahlen (3) so angeordnet ist, dass die Summe von Flecklängen der Vielzahl von Laserstrahlen (3), wobei sich die Flecklängen lotrecht zu einer Schweißnaht erstrecken, auf der Oberfläche des Bandstahls 0,5 mm oder mehr beträgt, und so, dass eine Distanz zwischen den Fleckzentren der Vielzahl von Laserstrahlen (3) in einer Richtung der Schweißnaht in einen Bereich von 5 mm fällt, wobei
jeder der Laserstrahlen (3) in einem Anschnittwinkel von 5 bis 50° emittiert wird, wobei der Winkel von einer Richtung, die lotrecht zu der Rohroberfläche verläuft, zu einer Richtung berechnet wird, die entgegengesetzt zu der Schweißrichtung verläuft, und
wobei ein hinterer Strahl der Laserstrahlen (3) in der Richtung der Schweißnaht angeordnet ist und ein Anschnittwinkel des hinteren Strahls kleiner als einen Anschnittwinkel eines vorderen Strahls der Laserstrahlen (3) ist.

2. Verfahren zur Herstellung eines lasergeschweißten Stahlrohres nach Anspruch 1, wobei eine Energiedichte von jedem der Laserstrahlen (3) auf einer Außenfläche des offenen Rohrs (1) 70 kW/mm² oder kleiner ist.

3. Verfahren zur Herstellung eines lasergeschweißten Stahlrohres nach Anspruch 1 oder 2, wobei eine Fokusposition von jedem der Laserstrahlen (3) 3T bis -3T von einer Außenfläche des offenen Rohrs (1) entfernt positioniert ist, wobei eine Dicke des offenen Rohrs (1) mit T gekennzeichnet ist.

4. Verfahren zur Herstellung eines lasergeschweißten Stahlrohres nach einem der Ansprüche 1 bis 3, wobei die Summe der Laserenergie der Vielzahl von Laserstrahlen (3) 15 kW oder mehr beträgt und eine Schweißgeschwindigkeit 7 m/min oder mehr beträgt.

5. Verfahren zur Herstellung eines lasergeschweißten Stahlrohres nach einem der Ansprüche 1 bis 4, wobei das offene Rohr (1) eine dicke T von mehr als 3 mm aufweist.

6. Verfahren zur Herstellung eines lasergeschweißten Stahlrohres nach einem der Ansprüche 1 bis 5, wobei ein Verformungsmaß von 0,3 bis 1,0 mm auf die Kanten (2) des offenen Rohres (1) angewendet wird, wenn die Kanten (2) mit den Abquetschwalzen gepresst werden.

## Revendications

1. Procédé de production de tuyau en acier soudé au laser consistant à former une bande d'acier dans un tuyau ouvert cylindrique (1) avec des rouleaux de formage et à effectuer un soudage sur les bords (2) du tuyau ouvert (1) en émettant un faisceau laser (3) sur les bords (2) à partir d' un côté de la surface extérieure du tuyau ouvert (1) tout en appuyant sur les bords (2) avec des rouleaux pinceurs, le procédé étant caractérisé en qu'il consiste à:
effectuer une soudure en utilisant une pluralité de faisceaux laser (3) ayant chacun un diamètre de la tache supérieur ou égal à 0,3 mm sur une surface d'une bande d'acier, la pluralité de faisceaux laser (3) étant agencée de telle sorte que la somme des longueurs de tache de la pluralité des faisceaux laser (3), les longueurs de tache se prolongeant perpendiculairement à une ligne de soudure, à la surface de la bande d'acier est supérieur ou égal à 0,5 mm et de telle sorte qu'une distance entre les centres de tache de la pluralité de faisceaux laser (3) dans une direction de la ligne de soudure soit inférieure à 5 mm, dans lequel
chacun des faisceaux laser (3) est émis à un angle d'attaque de 5 à 50°, l'angle étant calculé à partir d'une direction perpendiculaire à la surface du tuyau à une direction opposée à la direction de soudure et
dans lequel un faisceau de fuite des faisceaux laser (3) est disposé dans la direction de la ligne de soudure et un angle d'attaque du faisceau de fuite est inférieur à un angle d'attaque d'un faisceau d'attaque des faisceaux laser (3).

2. Procédé de production de tuyau en acier soudé au laser selon la revendication 1, dans lequel une densité d'énergie de chacun des faisceaux laser (3) sur une surface extérieure du tuyau ouvert (1) est égale ou inférieure à 70 kW/mm².

3. Procédé de production de tuyau en acier soudé au laser selon la revendication 1 ou la revendication 2, dans lequel une position de focalisation de chacun des faisceaux laser (3) est située 3T à -3T d'une surface extérieure du tuyau ouvert (1), dans lequel une épaisseur du tuyau ouvert (1) est désignée par T.

4. Procédé de production de tuyau en acier soudé au laser selon l'une quelconque des revendications 1 à 3, dans lequel la somme de la puissance du laser de la pluralité de faisceaux laser (3) est supérieure ou égale à 15 kW et dans lequel une vitesse de soudage est supérieure ou égale à 7 m/min.

5. Procédé de production de tuyau en acier soudé au laser selon l'une quelconque des revendications 1 à 4, dans lequel le tuyau ouvert (1) a une épaisseur T supérieure à 3 mm.

6. Procédé de production de tuyau en acier soudé au laser selon l'une quelconque des revendications 1 à 5, dans lequel un décalage de 0,3 à 1,0 mm est appliqué sur les bords (2) du tuyau ouvert (1) lorsque les bords (2) sont comprimés avec les rouleaux pinceurs.
